# EUROPEAN PATENT APPLICATION

(11) **EP 3 456 655 A1**
(43) Date of publication of application: **20.03.2019**
(21) Application number: 18194843.1
(22) Date of filing: 17.09.2018
(51) Int. Cl.: B65D 81/38, A47G 19/22, B65D 6/10

(54) **DOUBLE WALLED FOOD CONTAINER WITH PARTIAL FLEXIBLE INNER CONTAINER**

(30) Priority: 18.09.2017 IT 201700103989
(71) Applicant: Artsana S.p.A., 22070 Grandate (CO) (IT)
(72) Inventor: BELTRAMI, Gianluca, 20831 Seregno (IT)
(74) Representative: Perani & Partners S.p.A.

(57) **Abstract**

Food container (1) including: an external container (10) composed of a material comprising a first plastic material, an internal container (20) composed of a material comprising a second plastic material, said internal container (20) being arranged inside the external container (10) and being welded to the external container (10) so as to form a sealing cavity (30) between the internal container (20) and the external container (10), said cavity (30) including gas, characterized in that at least a portion of said internal container (20) is resilient and configured to deform under expansion of the gas contained inside the cavity (30).

## Description

### FIELD OF THE INVENTION

The present invention relates to food containers, made of plastic material, having thermo-insulating properties and suitable to be heated and/or sterilized.

### STATE OF THE ART

Presently there exist on the market several thermo-insulating containers allowing to carry food or beverage, keeping the temperature thereof for a long time.

Many of the presently commercially available solutions are made of plastic material, which guarantees a greater versatility both from a structural and aesthetical point of view, allowing for example to produce transparent containers through which a pattern or a customized image is visible.

The greatest majority of the commercially available thermo-insulating plastic containers includes two containers, an internal one and an external one, wherein the first one can be inserted inside the second one and wherein the two containers are welded to each other to form a cavity.

Said plastic containers, also due to the aesthetic need of transparency, use the presence of air or gas inside the cavity for obtaining a thermo-insulating effect.

In particular, in the field of childcare products, such as baby bottles and cups, it is required that the container can be heated and possibly sterilised, thus suitable to bear high temperatures without undergoing substantial alterations from a chemical and structural point of view.

To this end, the insulating region of the cavity is provided with a hole which puts into communication the internal chamber of the cavity with the external environment. The opening guarantees that, when heating and expanding the air/gas contained in the cavity, the container does not explode and vents outwardly from the hole.

The presence of an opening on the external surface of the container however implies health and hygiene problems.

In fact, the hole allows water inlet, and the collection thereof inside the cavity, with the possibility of bacteria growth between the internal container and the external container.

GB2032876 describes a plastic material container intended to receive hot food products or which can be reconstituted on the spot by means of hot water.

The container comprises an external wall and an internal wall between which a cavity is defined. The external wall has, at the mouth of the container, a protruding lip, while the internal wall has a flange with an undercut, wherein the protruding lip of the external wall springs for forming a substantially sealing joint.

The container is provided with at least a flexible bottom wall which fits to the expansion of the air contained in the cavity, preventing the container carrying food or hot food liquids from breaking.

The container described in GB2032876 can also be intended to contain and carry foods which require sterilisation, such as meat.

In this case, the insulated internal wall is filled with a food product, suitably sealed and placed in an autoclave for sterilization at 130°C for 15-30 minutes.

The external wall is combined with the internal wall for forming the final container only upon conclusion of the sterilisation treatment.

### SUMMARY OF THE INVENTION

The Applicant has developed a container made of plastic material comprising a thermo-insulating sealing cavity, which has a resilient portion balancing the expansion of the air or of gas contained inside the cavity while being heated.

Advantageously the container can be wholly sterilised, with no need to separate elements before the hot treatment.

### DESCRIPTION OF THE FIGURES

The characteristics and advantages of the present invention will be clear from the following detailed description of a possible practical embodiment, illustrated as a non limiting example in the totality of drawings, wherein:
- Figure 1 shows a sectional schematic view of a container according to an embodiment of the present invention, in one first configuration,
- Figure 2 shows a sectional schematic view of the container of Figure 1, in one second configuration.

### DETAILED DESCRIPTION OF THE INVENTION

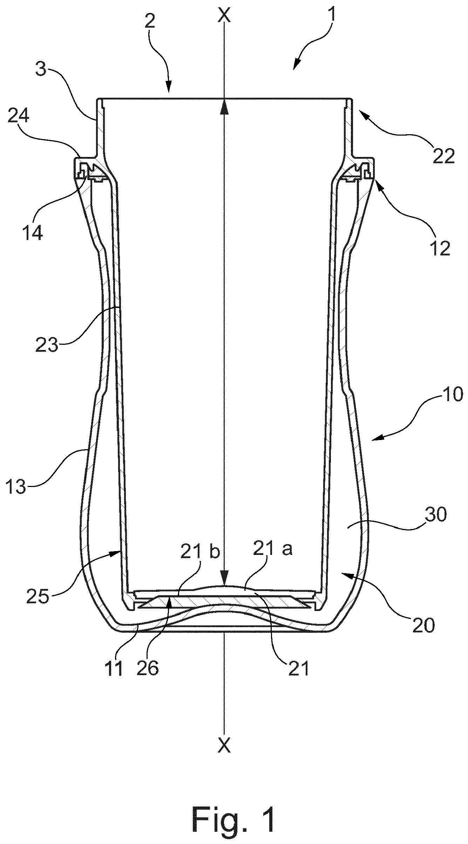

In Figure 1 a container 1 made of plastic material according to an embodiment of the present invention is schematically represented.

Container 1 comprises an orifice 2 and a mouth 3 delimiting the orifice 2.

Container 1 comprises an external container 10 composed of a material comprising a first plastic material, and an internal container 20, composed of a material comprising a second plastic material.

The internal container 20 is arranged inside the external container 10 and it is welded to the internal container 20 to define a sealing cavity 30 between the internal container 20 and the external container 10.

Cavity 30 comprises a gas. The gas is preferably air.

The internal container 20 and the external container 10 respectively comprise a bottom 21, 11, an upper edge 22, 12 and a side wall 23, 13 extending along a longitudinal direction X-X between the bottom 21, 11 and the upper edge 22, 12.

Preferably, the bottom 21 and the side wall 23 of the internal container 20 and the bottom 11 and the side wall 13 of the external container 10 are spaced apart for their whole extension by the sealing cavity 30.

In other words, the sealing cavity 30 defines a continuous volume between the internal container 20 and the external container 10, so that the bottom 21, 11 and the side wall 23, 13 of the respective internal 20 and external 10 containers are never in contact, within the aforesaid cavity 30.

According to a preferred embodiment, the internal container 20 has a flange 24 which extends transversally with respect to the longitudinal direction X-X and said external container 10 has a flange 14 which extends along the longitudinal direction X-X. Preferably, the flange 14 of the external container 10 is formed at the upper edge 12 while the flange 24 of the internal container 20 is formed between the bottom 21 and the upper edge 22 and protrudes outwardly from the side wall 23 of the internal container 20. The portion of side wall 23 of the internal container 20 which extends from the flange 24 to the upper edge 22 identifies the mouth 3 of the container 1. Said internal 20 and external 10 containers are welded at the respective flanges 14, 24, thus guaranteeing that the cavity 30 is tight.

More precisely, the cavity is watertight and partially airtight.

The welding of flanges 24, 14 of said internal 20 and external 10 containers advantageously guarantees water tightness, preventing collection and stagnation of liquids inside the cavity.

At the same time, container 1 uses the low thermal conductivity of the air at limited atmospheric pressure in the cavity for implementing a thermal insulation between the inside of the container 1 and the outside thereof. This allows to slow down the temperature decay of food or beverage contained therein.

Still more advantageously, the container 1 can be subjected to heating and sterilisation, without undergoing chemical or structural alterations.

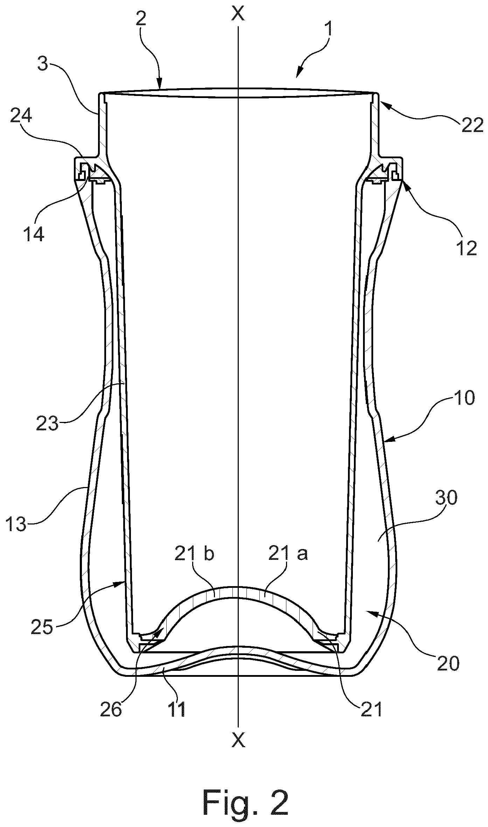

At least one portion of said internal container 20 is resilient and configured to deform under expansion of the gas contained inside the cavity 30 (Figure 2).

In materials science, resilience is the ability of a material to absorb energy under elastic deformation and to recover this energy at removal of load. It indicates the competence of a certain material to hold a certain stress without permanent deformation.

More preferably, said at least one resilient portion deforms inside the internal container 20.

In other words, said at least a resilient portion deforms expanding preferably along the longitudinal direction X-X, in the upper edges 22, 12 direction, within the side wall 23 of the internal container 20.

The simultaneous presence of the sealing cavity 30 and of at least one resilient portion of the internal container 20, allows to overcome the expansion of the gas contained in the cavity 30 while being heated, by means of the deformation of the resilient portion(s) towards the inside of the internal container 20, safeguarding the structural entirety of the thermo-insulating cavity 30.

Therefore container 1 guarantees heating mechanical strength and cleanliness of the container, without undesired bacteria growth.

According to a preferred embodiment, the internal container 20 is obtained by injection co-moulding, where with moulding it is meant an industrial production process wherein a plastic material is melted and injected at high pressure inside a closed mould, which is opened upon solidification of the artifact.

In particular co-moulding is a process which enables, by means of hot injection, to incorporate, coat or weld together two elements of different materials, for example for joining metal inserts to plastic, for joining different types of plastics or for putting together in one single piece plastic and rubber.

The internal container 20 preferably comprises one first portion 25, which extends between the upper edge 22 and the bottom 21, composed of the second plastic material, and one second portion 26, defining said at least one resilient portion, co-moulded with the first portion 35, and composed of a third plastic material.

The expressions "material" and "plastic material" are used within the scope of the present invention with the meaning of substance, mixture or composite, thus indicating that the portions forming the container can be made from a single substance, a mixture of substances or from the combination of layers of one or more substances, combined to form a composite structure.

The second plastic material is preferably selected from the group of thermoplastic materials, such as for example polypropylene omopolymers and copolymers. According to a preferred embodiment, said second plastic material is equal to said first plastic material.

Advantageously, the employment of polypropylene guarantees that container 1 is resilient to humidity and thermal heating, providing a functional structural stiffness with respect to transport and handling.

The third plastic material is preferably selected from the group of thermoplastic elastomers (TPE), such as for example metallocene-catalysed polyolefin elastomers. Still more preferably, said third plastic material is the semi-crystalline polypropylene and ethylene copolimer, for example commercially available with the trade name of Vistamaxx™.

According to a preferred embodiment, the second resilient portion 26 of the internal container 20 is composed of the bottom 21 of the internal container 20.

According to the embodiment wherein the bottom 21 of the internal container 20 identifies the resilient portion 25, the bottom 21 comprises a central area 21a and a side area 21b, where said central area 21a has a greater thickness than the side area 21b.

The container 1 according to the invention is in compliance with the general Guidelines concerning "Products Safety", requiring the product to be marketed being safe for use.

More particularly, the container 1 of the invention adheres to the regulations concerning food containers, according to the type of product:
- For what concerns containers for liquids, the reference regulation is *"EN 14350-1 Child use and care articles* - *Drinking equipment* - *Part 1: General and mechanical requirements and tests*"*.* Before being subjected to the formal suitability tests, the container has to comply with the requirements of the preconditioning test described in Cl. 5.6.1, concerning "*Resistance to boiling water*"*.*
- For what concerns containers for food, the reference regulation is "*EN 14372 Child use and care articles* - *Cutlery and feeding utensils -Safety requirements and tests*"*.* Before being subjected to the formal suitability tests, the container has to satisfy the requirements of the preconditioning test descrived in Cl 6.1 (*Preparation of samples and general testing conditions*), concerning a heat treatment process, under less sever conditions than the aforementioned test for containers for liquids.

## Claims

1. A food container (1) including:
- one external container (10) composed of a material including one first plastic material,
- one internal container (20) composed of a material including one second plastic material, said internal container (20) being arranged inside the external container (10) and being welded to the external container (10) so as to form a sealing cavity (30) between the internal container (20) and the external container (10), said cavity (30) including gas,
**characterized in that**
at least one portion of said internal container (20) is resilient and configured to deform under expansion of the gas contained inside the cavity (30).

2. The container according to claim 1 wherein
said internal and external container (20, 10) have respectively a bottom (21, 11), an upper edge (22, 12) and a side wall (23, 13) extending according to a longitudinal direction X-X between the bottom (21,11) and the upper edge (22, 12), and
the bottom (21) and the side wall (23) of the internal container (20) and the bottom (11) and the side wall (13) of the external container (10) are spaced apart for their whole extension from the sealing cavity (30).

3. The container according to claim 2, wherein said internal container (2) is co-moulded and includes
- one first portion (25), extending between the upper edge (22) and the bottom (21) of the internal container (20), composed of said second plastic material,
- one second portion (26), defining said at least one resilient portion, co-moulded with the first portion (25) and composed of a third plastic material.

4. The container according to claim 3 wherein said second plastic material is identical to said first plastic material.

5. The container according to any one of claims 2 to 4 wherein said at least one resilient portion is composed of the bottom (21) of the internal container (20).

6. The container according to any one of claims 2 to 5 wherein said internal container (20) has a flange (24) that extends transversally to the longitudinal direction X-X and said external container (10) has a flange (14) that extends along the longitudinal direction X-X, and said internal (20) and external (10) container are welded at their respective flanges (24, 14).

7. The container according to any one of claims 1 to 6 including an orifice (2) and a mouth (3) that delimits the orifice (2).

8. The container according to claim 7 wherein the side wall portion (23) of the internal container (20) extending from the flange (24) to the upper edge (22) identifies the mouth (3) of the container (1).
